# FASCICULE DE BREVET EUROPEEN

(11) **EP 2 683 513 B1**
(45) Date de publication et mention de la délivrance du brevet: **19.12.2018**
(21) Numéro de dépôt: 12712324.8
(22) Date de dépôt: 05.03.2012
(51) Int. Cl.: B23C 3/00, B23C 3/30, F02F 1/00, F02F 7/00

(54) **PROCEDE D'USINAGE DU PASSAGE DE BIELLE DANS UN CARTER CYLINDRE, CARTER CYLINDRE ET MOTEUR OBTENUS PAR LE PROCEDE**
VERFAHREN ZUR BEARBEITUNG DES PLEUESTANGENDURCHGANGS IN DER OBEREN HÄLFTE EINES KURBELWELLENGEHÄUSES, MIT DIESEM VERFAHREN HERGESTELLTE OBERE HÄLFTE EINES KURBELWELLENGEHÄUSES UND MOTOR
METHOD FOR MACHINING THE CONNECTING ROD PASSAGE IN A CRANK CASE UPPER HALF, CRANK CASE UPPER HALF AND ENGINE OBTAINED USING THE METHOD

(30) Priorité: 11.03.2011 FR 1151998
(43) Date de publication de la demande: 15.01.2014
(73) Titulaire: Renault S.A.S., 92100 Boulogne-Billancourt (FR)
(72) Inventeur: GAMEIRO, André, F-78260 Acheres (FR)
(86) Numéro de dépôt international: PCT/FR2012/050453
(87) Numéro de publication internationale: WO 2012/123659

(56) Documents cités:
- EP-A1- 1 205 658
- WO-A1-2006/018238
- DE-A1-102005 051 185
- FR-A5- 2 031 048
- GB-A- 133 443
- GB-A- 191 115 473
- US-A- 3 811 163
- US-A- 4 276 812
- US-A- 5 404 846

## Description

La présente invention se rapporte à l'usinage des carters cylindres de moteur à combustion interne.

Plus précisément, elle se rapporte à un procédé d'usinage de passage de bielle dans un carter cylindre de moteur à combustion interne selon le préambule de la revendication 1, ainsi qu'au carter et au moteur réalisés conformément à ce procédé.

Un tel procédé et un tel carter cylindre sont connus du document DE 10 2005 051185 A1.

Le procédé consiste à réaliser au pied du fût de cylindre une découpe droite de forme cylindrique propre à autoriser le débattement latéral de la bielle, lors de la montée et de la descente du piston dans le cylindre, avec un outil de fraisage rotatif qui opère par plongée sous le cylindre.

Une bielle de moteur à combustion interne comporte généralement un pied de bielle portant l'axe d'entraînement du piston, et une tête de bielle, reliée au vilebrequin. Le pied de bielle présente un alésage qui reçoit l'axe d'entraînement du piston. La tête de bielle présente également un alésage, qui reçoit un maneton déporté par rapport à l'axe de rotation du vilebrequin.

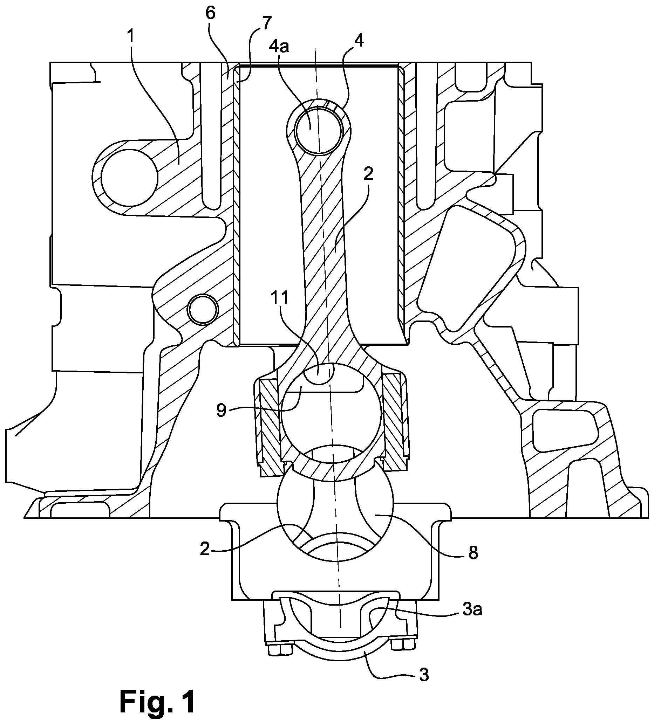

La bielle a pour fonction de relier le vilebrequin au piston, afin de transformer le mouvement de rotation du vilebrequin en un déplacement vertical alternatif du piston à l'intérieur du cylindre. Sa tête tourne avec le vilebrequin, tandis que son pied débat verticalement avec le piston entre les positions, de point mort haut et de point mort bas, mises en évidence sur la figure 1. Entre ces deux positions extrêmes, la bielle monte et descend avec le piston, en se rapprochant et en s'écartant de la paroi du cylindre.

Les ouvertures autorisant le débattement de la bielle au pied cylindre, ou passages de bielles, sont généralement usinés au pied du fût de cylindre, à l'aide d'une fraise rotative se déplaçant par plongées verticales. La fraise attaque frontalement la base du fût, et la découpe, ou embrèvement, ainsi réalisé, est une découpe droite dans la partie inférieure de celui-ci.

L'attaque frontale du fût de cylindre par la fraise présente un risque conjugué d'usure rapide, de l'outil de fraisage et de la jupe du piston, lorsqu'elle descend au contact de l'embrèvement.

La présente invention vise à améliorer la qualité de l'usinage réalisé des passages de bielles d'un cylindre, tout en limitant les risques d'usure prématurée de la jupe de piston et celle de l'outil de fraisage.

Dans ce but, elle propose d'orienter la direction de plongée de l'outil de fraisage obliquement, par rapport à l'axe du cylindre.

L'invention a pour objet un procédé selon la revendication 1 et un carter cylindre selon la revendication 3.

La découpe du passage de bielle usinée dans le fût u cylindre, est donc orientée obliquement par rapport à l'axe de celui-ci.

La présente invention sera mieux comprise à la lecture de la description suivante d'un mode de réalisation non limitatif de celle-ci, en se reportant aux dessins annexés, sur lesquels :
- la figure 1 illustre le déplacement d'une bielle dans un carter cylindre,
- la figure 2 illustre un procédé d'usinage connu des passages de bielle,
- la figure 3 montre l'embrèvement réalisé selon le procédé connu,
- la figure 4 illustre le procédé d'usinage proposé, et
- les figures 5 et 6 mettent en évidence le débattement de la bielle dans un carter usiné conformément à l'invention.

Sur la figure 1, on a représenté en coupe un carter cylindre 1 de moteur à combustion interne, et la bielle 2 associée au piston (non représenté), à proximité de ses positions de point mort haut et de point mort bas. La tête de bielle 3 présente un alésage 3a qui reçoit un maneton (non représenté) du vilebrequin. Le pied de bielle 4 présente un alésage 4a, qui reçoit l'axe d'entraînement du piston (également non représenté). Le fût du cylindre 6 est recouvert intérieurement d'une chemise 7 normalement insérée à la coulée. Le passage de vilebrequin 8 apparaît également dans le plan de coupe, entre les deux représentations de la bielle 2. Derrière celle-ci, on voit le fond d'un cylindre vertical 9 de diamètre plus réduit que le précédent, qui permet le dégagement de l'outil de pierrage (non représenté), utilisé pour réaliser la finition de l'état de surface du fût, et le trou de passage 11 des gaz, traversant horizontalement le cylindre 9.

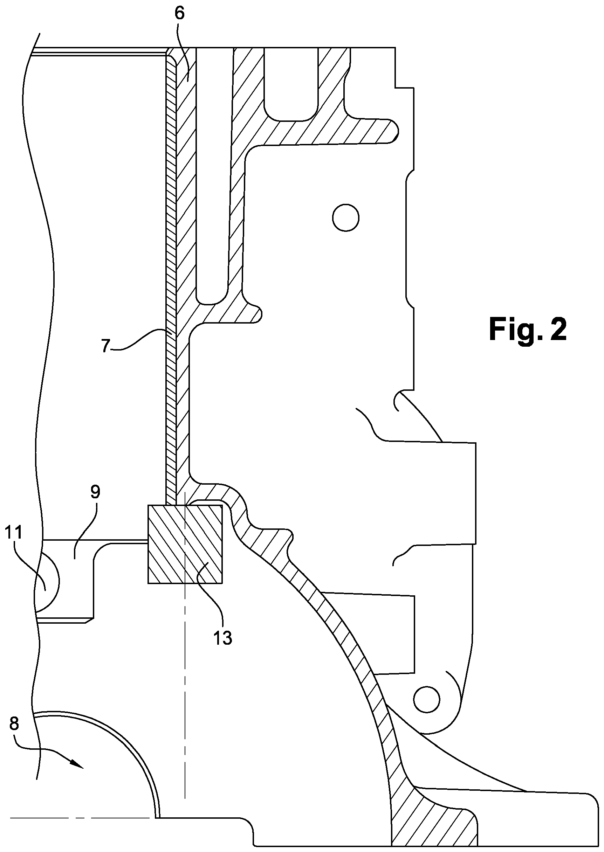

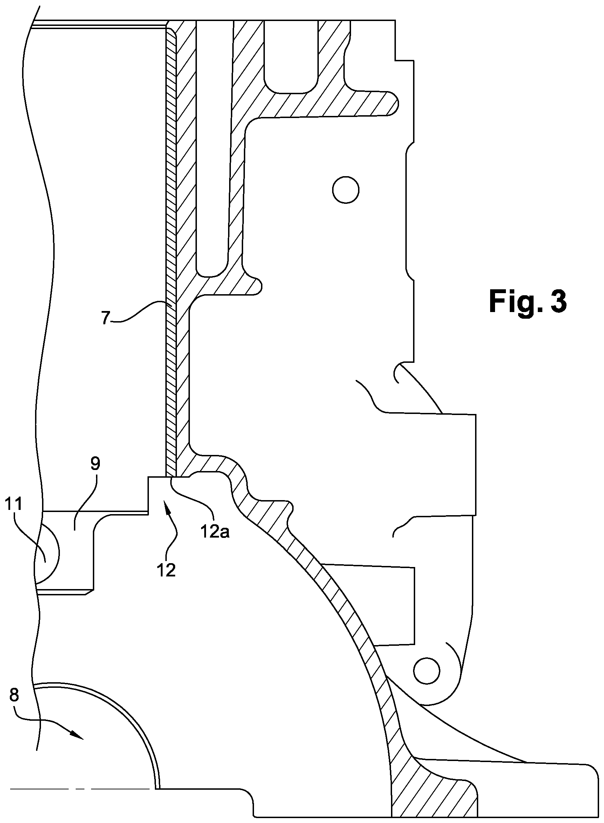

Sur l'agrandissement des figures 2 et 3, où la bielle n'est plus montrée, on a représenté schématiquement l'outil de fraisage 13 en position de travail au pied du fût 6 (figure 2) et l'embrèvement 12 réalisé par celui-ci selon le procédé d'usinage connu, par plongées verticales sous le cylindre. L'embrèvement 12 ainsi réalisé est une découpe droite, formant une arête vive 12a au pied du fût 6. Comme indiqué plus haut, l'attaque frontale du pied du fût par l'outil de fraisage conduit à une usure rapide de celui-ci. Par ailleurs, la jupe du piston (non représentée) risque également de se détériorer si elle entre en contact avec cette arête, et le débattement latéral de la bielle est strictement limité par la hauteur de la découpe 12 au pied du fût, qui présente une arête vive, mise en évidence sur la figure 3.

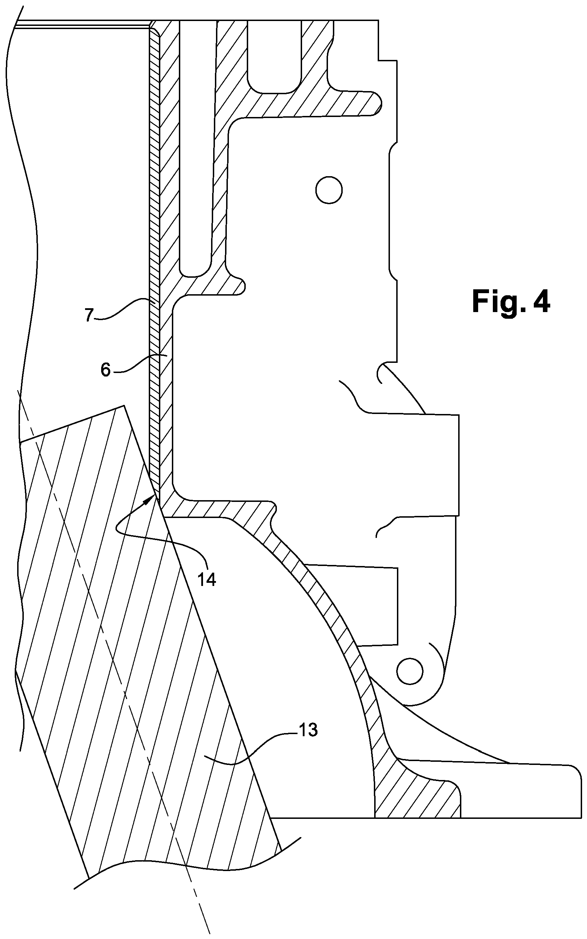

La figure 4 montre un outil de fraisage cylindrique 13 réalisant une plongée, non plus verticale, mais oblique dans le cylindre. Un tel usinage s'effectue avec un choc moins violent de l'outil sur le fût 6. La surface d'embrèvement, ou découpe 14 est de forme cylindrique. Elle est orientée obliquement, selon l'axe de plongée de l'outil. Cette surface est plus réduite qu'avec procédé connu.

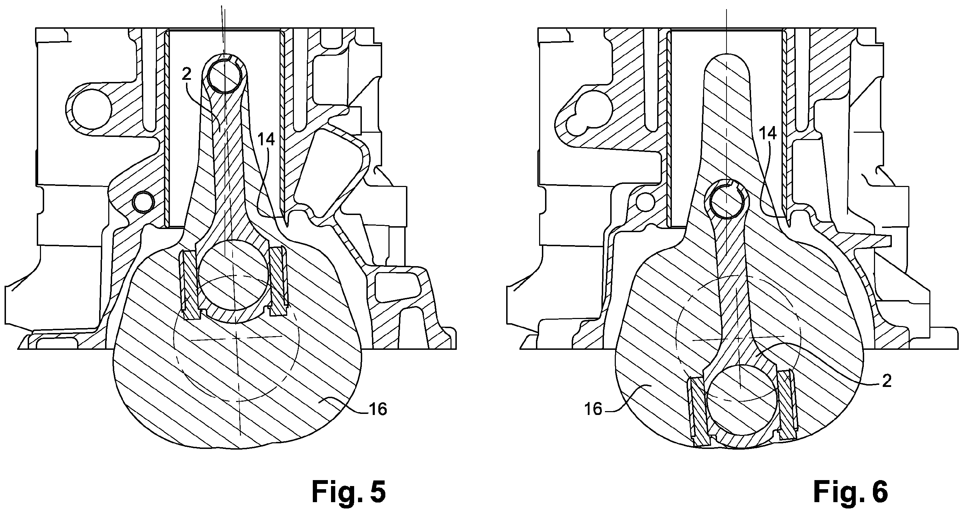

Sur les figures 5 et 6, on retrouve la bielle 2, et on a représenté l'espace 16, à l'intérieur duquel la bielle débat autour du vilebrequin. Cet espace est appelé « mandoline » par les spécialistes, pour sa ressemblance avec l'instrument de musique du même nom. Sa forme est imposée par les dimensions et la cinématique de la bielle.

Les schémas mettent en évidence que l'embrèvement 14, réalisé selon l'invention, permet de ménager un espace un espace suffisant entre le cylindre et le trajet de la bielle 3, lors de la montée et de la descente du piston, pour éviter tout risque de choc à ce niveau.

La bielle et le pied du fût de cylindre sont ainsi à l'abri de chocs mutuels, pouvant survenir en fonctionnement du fait de l'usure de pièces, ou de l'augmentation de leurs jeux de fonctionnement, au cours de la vie du moteur.

Comme indiqué plus haut, l'invention présente encore d'autres avantages. En particulier, la jupe du piston ne risque plus de rencontrer d'arête vive lorsqu'elle se déplace dans la partie inférieure du fût, à proximité du point mort bas. Enfin, l'outil de fraisage est également préservé de chocs frontaux contre le pied du fût.

## Revendications

1. Procédé d'usinage de passage de bielle (3) dans un carter cylindre de moteur à combustion interne consistant à réaliser au pied du fût de cylindre (6) une découpe droite (14) de forme cylindrique, propre à autoriser le débattement latéral de la bielle, lors de la montée et de la descente du piston dans le cylindre, avec un outil de fraisage rotatif qui opère par plongée sous le cylindre, **caractérisé en ce que** la direction de plongée de l'outil de fraisage (13) est orientée obliquement par rapport à l'axe du cylindre.

2. Procédé d'usinage selon la revendication 1, **caractérisé en ce que** la découpe (14) ménage un espace suffisant entre le cylindre et le trajet de la bielle lors de la montée et de la descente du piston, pour éviter tout risque de choc à ce niveau.

3. Carter cylindre de moteur à combustion interne, comportant un fût de cylindre (6) qui présente à son pied une découpe (14) de passage de bielle de forme cylindrique obtenue conformément aux revendications 1 ou 2, propre à autoriser le débattement latéral de la bielle (3) lors de la montée et de la descente du piston dans le cylindre, **caractérisé en ce que** la découpe cylindrique (14) est orientée obliquement par rapport à l'axe du cylindre selon l'axe de l'outil de fraisage.

4. Carter cylindre présentant conformément à la revendication 3 comportant un fût de cylindre (6) qui présente à son pied une découpe (14) de passage de bielle de forme cylindrique obtenue conformément aux revendications 1 ou 2, propre à autoriser le débattement latéral de la bielle (3) lors de la montée et de la descente du piston dans le cylindre, **caractérisé en ce que** la découpe (14) reste à l'écart de l'espace réservé au débattement de la bielle lors de la montée et de la descente du piston dans le cylindre.

5. Moteur à combustion interne, **caractérisé en ce que** son carter cylindre est conforme à l'une des revendications 3, ou 4.

## Patentansprüche

1. Verfahren zum Bearbeiten des Durchgangs der Pleuelstange (3) in einem Zylindergehäuse eines Verbrennungsmotors, welches darin besteht, am Fuß der Zylinderbuchse (6) einen geraden Schnitt (14) von zylindrischer Form durchzuführen, welcher geeignet ist, die seitliche Auslenkung der Pleuelstange bei dem Anstieg und dem Abstieg des Kolbens in dem Zylinder zu ermöglichen, mit einem Drehfräswerkzeug, welches durch Abtauchen unter den Zylinder operiert, **dadurch gekennzeichnet, dass** die Abtauchrichtung des Fräswerkzeugs (13) in Bezug auf die Achse des Zylinders schräg ausgerichtet ist.

2. Bearbeitungsverfahren nach Anspruch 1, **dadurch gekennzeichnet, dass** der Schnitt (14) einen ausreichenden Raum zwischen dem Zylinder und der Bahn der Pleuelstange bei dem Anstieg und dem Abstieg des Kolbens herbeiführt, um jedes Stoßrisiko in diesem Bereich zu vermeiden.

3. Zylindergehäuse eines Verbrennungsmotors, aufweisend eine Zylinderbuchse (6), welche an ihrem Fuß einen Schnitt (14) von zylindrischer Form des Durchgangs der Pleuelstange aufweist, der gemäß den Ansprüchen 1 oder 2 erzielt wird, welcher geeignet ist, die seitliche Auslenkung der Pleuelstange (3) bei dem Anstieg und dem Abstieg des Kolbens in dem Zylinder zu ermöglichen, **dadurch gekennzeichnet, dass** der zylindrische Schnitt (14) in Bezug auf die Achse des Zylinders gemäß der Achse des Fräswerkzeugs schräg ausgerichtet ist.

4. Zylindergehäuse aufweisend gemäß Anspruch 3, aufweisend eine Zylinderbuchse (6), welche an ihrem Fuß einen Schnitt (14) von zylindrischer Form des Durchgangs der Pleuelstange aufweist, der gemäß den Ansprüchen 1 oder 2 erzielt wird, welcher geeignet ist, die seitliche Auslenkung der Pleuelstange (3) bei dem Anstieg und dem Abstieg des Kolbens in dem Zylinder zu ermöglichen, **dadurch gekennzeichnet, dass** der Schnitt (14) von dem Raum beabstandet bleibt, welcher für die Auslenkung der Pleuelstange bei dem Anstieg und dem Abstieg des Kolbens in dem Zylinder reserviert ist.

5. Verbrennungsmotor, **dadurch gekennzeichnet, dass** sein Zylindergehäuse gemäß einem der Ansprüche 3 oder 4 ist.

## Claims

1. Method for machining a connecting rod passage (3) in a cylinder crankcase of an internal combustion engine, involving producing at the base of the cylinder shaft (6) a straight cut (14) of cylindrical form, which is capable of allowing the lateral travel of the connecting rod when the piston moves up and down in the cylinder, with a rotary milling tool which operates by means of travel below the cylinder, **characterized in that** the direction of travel of the milling tool (13) is orientated obliquely relative to the axis of the cylinder.

2. Machining method according to Claim 1, **characterized in that** the cut (14) provides sufficient space between the cylinder and the path of the connecting rod when the piston is raised and lowered, in order to prevent any risk of impact in this region.

3. Cylinder crankcase of an internal combustion engine comprising a cylinder shaft (6) which has at the base thereof a cylindrical cut (14) for passage of a connecting rod, which cut is obtained in accordance with either of Claims 1 and 2, and which is capable of allowing the lateral travel of the connecting rod (3) when the piston moves up and down in the cylinder, **characterized in that** the cylindrical cut (14) is orientated obliquely relative to the axis of the cylinder in accordance with the axis of the milling tool.

4. Cylinder crankcase having in accordance with Claim 3, comprising a cylinder shaft (6) which has at the base thereof a cylindrical cut (14) for passage of a connecting rod, which cut is obtained in accordance with either of Claims 1 and 2, and which is capable of allowing the lateral travel of the connecting rod (3) when the piston moves up and down in the cylinder, **characterized in that** the cut (14) remains remote from the space reserved for the travel of the connecting rod when the piston moves up and down in the cylinder.

5. Internal combustion engine, **characterized in that** the cylinder crankcase thereof is in accordance with either of Claims 3 and 4.
